(19) Europäisches Patentamt
European Patent Office
Office européen des brevets

(11) **EP 4 099 422 B1**

(12) **EUROPEAN PATENT SPECIFICATION**

(45) Date of publication and mention
of the grant of the patent:
**06.08.2025 Bulletin 2025/32**

(21) Application number: **21747815.5**

(22) Date of filing: **21.01.2021**

(51) International Patent Classification (IPC):
*H01M 4/02* (2006.01)     *H01M 4/13* (2010.01)
*H01M 4/36* (2006.01)     *H01M 10/052* (2010.01)
*H01M 10/0566* (2010.01)     *H01M 4/131* (2010.01)
*H01M 4/525* (2010.01)

(52) Cooperative Patent Classification (CPC):
**H01M 4/366; H01M 4/13;** H01M 4/131; H01M 4/525;
H01M 2004/021; H01M 2004/028; Y02E 60/10

(86) International application number:
**PCT/JP2021/001959**

(87) International publication number:
**WO 2021/153397 (05.08.2021 Gazette 2021/31)**

(54) **POSITIVE ELECTRODE FOR SECONDARY BATTERY AND SECONDARY BATTERY**

POSITIVELEKTRODE FÜR SEKUNDÄRBATTERIE SOWIE SEKUNDÄRBATTERIE

ÉLECTRODE POSITIVE POUR BATTERIE SECONDAIRE ET BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2020 JP 2020015893**

(43) Date of publication of application:
**07.12.2022 Bulletin 2022/49**

(73) Proprietor: **Panasonic Intellectual Property
Management Co., Ltd.
Kadoma-shi, Osaka 571-0057 (JP)**

(72) Inventors:
• **YAMAMOTO Rina**
  **Kadoma-shi, Osaka 571-0057 (JP)**
• **UKA Youichirou**
  **Kadoma-shi, Osaka 571-0057 (JP)**

(74) Representative: **Novagraaf International SA
Chemin de l'Echo 3
1213 Onex, Geneva (CH)**

(56) References cited:
WO-A1-2005/020354     WO-A1-2017/057078
WO-A1-2019/044205     JP-A- 2014 143 063
JP-A- 2016 058 309     US-A1- 2015 255 786
US-A1- 2017 256 788

## Description

[Technical Field]

The present disclosure relates to a secondary battery, and particularly to an improvement of a positive electrode used for a secondary battery.

[Background Art]

Secondary batteries, particularly lithium ion secondary batteries, have high output and high energy density, and therefore are expected as a promising power source for small consumer applications, power storage devices, and electric cars.

Patent Literature 1 proposes using, in a non-aqueous electrolyte secondary battery, composite oxide particles in a non-aggregated state having a compressive strength of 250 MPa or more as a positive electrode active material. This is intended to suppress the decrease in capacity retention ratio and the increase in resistance during charge and discharge cycles, even when using a positive electrode active material that includes composite oxide particles containing Ni, Co and Li and containing at least one of Mn and Al such that the ratio of Ni to the total number of moles of the metal elements except Li is 50 mol% or more.

Patent Literature 2 proposes using, in a non-aqueous electrolyte secondary battery, a positive electrode active material that includes composite oxide particles containing Ni, Co and Li and containing at least one of Mn and Al such that the ratio of Ni to the total number of moles of the metal elements except Li is 80 mol% or more, wherein the ratio of aggregated particles to non-aggregated particles contained in the composite oxide is 5:95 to 50:50 by mass. This is intended to improve the battery capacity (discharge capacity) and the direct current resistance.

[Citation List]

[Patent Literature]

[PTL 1] International publication WO2019/026629
[PTL 2] International publication WO2019/097951
[PTL 3] US2017256788A1

[Summary of Invention]

With the conventional positive electrode, it has been difficult to realize a secondary battery having both high energy density and excellent cycle characteristics.

In view of the above, one aspect of the present disclosure relates to a positive electrode for a secondary battery, including: a positive electrode current collector; and a positive electrode mixture layer containing a positive electrode active material and disposed on a surface of the positive electrode current collector, wherein the positive electrode mixture layer contains a first positive electrode active material having a compressive strength of 400 MPa or more, and a second positive electrode active material having a compressive strength of 250 MPa or less, and when the positive electrode mixture layer is divided into a first region and a second region having the same thickness, the first positive electrode active material is contained more in the first region than in the second region, and the second positive electrode active material is contained more in the second region than in the first region.

Another aspect of the present disclosure relates to a secondary battery having the aforementioned positive electrode for a secondary battery, a separator, a negative electrode facing the positive electrode with the separator interposed between the positive electrode and the negative electrode, and an electrolyte solution.

According to the present disclosure, it is possible to realize a secondary battery having both high energy density and excellent cycle characteristics.

[Brief Description of Drawings]

[FIG. 1] A schematic cross-sectional view showing a structure of a positive electrode for a secondary battery according to one embodiment of the present disclosure.

[FIG. 2] A partially cut-away schematic oblique view of a secondary battery according to one embodiment of the present disclosure.

[Description of Embodiments]

A positive electrode for a secondary battery according to an embodiment of the present disclosure includes a positive electrode current collector, and a positive electrode mixture layer containing a positive electrode active material and disposed on a surface of the positive electrode current collector. The positive electrode mixture layer contains a first positive electrode active material having a compressive strength of 400 MPa or more, and a second positive electrode active material having a compressive strength of 250 MPa or less.

Here, when the positive electrode mixture layer is divided into a first region and a second region having the same thickness, the first positive electrode active material is contained more in the first region than in the second region, and the second positive electrode active material is contained more in the second region than in the first region. That is, the first positive electrode active material and the second positive electrode active material have a concentration distribution in the thickness direction of the positive electrode mixture layer. In the first region, the concentration of the first positive electrode active material is high, and in the second region, the concentration of the second positive electrode active material is high. The concentration herein means a content ratio by mass. The first region may contain substantially no second positive electrode active material. The second region may contain substantially no first positive electrode active material.

The first positive electrode active material hardly expands and contracts, and therefore is hardly crushed. When the first positive electrode active material is used as the positive electrode active material, the expansion and contraction of the positive electrode active material associated with charge and discharge are suppressed, and the crushing of the positive electrode active material is suppressed. As a result, the formation of a new surface that causes an electrochemical reaction including a side reaction can be suppressed, and the cycle retention ratio can be improved. However, the improvement in capacity is not enough to obtain a battery having a high energy density.

In order to obtain a secondary battery having a high energy density, an attempt has been made to increase the applied amount of the positive and the negative electrode active material, to form a material mixture layer thickly. In this case, typically, the positive electrode mixture layer is rolled in the production process of the positive electrode. By rolling the positive electrode mixture layer, the positive electrode active material particles are brought closely to each other and are partially crushed, and fine particles generated by crushing can fill the gaps between the active material particles. This makes it possible to obtain a higher energy density. However, since the first positive electrode active material is hardly crushed, it is difficult to obtain a battery having a high energy density by only using the first positive electrode active material.

On the other hand, the second positive electrode active material is easily compressed as compared to the first positive electrode active material. Specifically, during rolling, fine particles generated by crushing of the second positive electrode active material fill the gaps between the second positive electrode active material particles, or the second positive electrode active material is deformed to fill the gaps between the second positive electrode active material particles, and the apparent volume tends to decrease. Therefore, it is easy to obtain a secondary battery having a high energy density. It may occur, however, that due to the compression, the electrolyte solution becomes difficult to impregnate deep into the positive electrode mixture layer on the positive electrode current collector side, and the electrolyte permeability is worsened. As a result, it is difficult to obtain a battery with excellent cycle characteristics.

However, when the positive electrode mixture layer has the first region and the second region differing in the contents of the first positive electrode active material and the second positive electrode active material, the pressure applied to the positive electrode mixture layer under compression is dispersed, and the density of the active material in the positive electrode mixture layer can be appropriately increased. As a result, a battery having a high energy density can be obtained. This battery has favorable electrolyte permeability and is excellent in cycle characteristics.

The first positive electrode active material comprises, for example, non-aggregated particles (composite oxide particles). The non-aggregated composite oxide particles include particles in which the composite oxide particles are present separately one by one each as a primary particle, and particles in which several to dozens of primary particles (specifically, 2 to 19 particles) are aggregated together. The non-aggregated composite oxide particles, which are hardly crushed and whose surface area therefore are unlikely to increase, are excellent in cycle characteristics, but on the other hand, when subjected to excessive compressive stress, the particles are crushed, and the cycle characteristics may deteriorate in some cases. However, the second region rich in the second positive electrode active material serves to relieve the compressive force applied to the first positive electrode mixture layer, and even when a large compressive force is applied to the positive electrode mixture layer, a high cycle retention ratio can be realized. Furthermore, by increasing the pressure when rolling, the density of the positive electrode mixture layer can be easily increased.

The particle diameter of the non-aggregated composite oxide particles may be 5 $\mu$m or less. For example, the particle diameter of the non-aggregated composite oxide particles is 2 $\mu$m or more and 5 $\mu$m or less. In this case, a high cycle retention ratio can be easily realized. The particle diameter of the non-aggregated composite oxide particles is an average of the particle diameters obtained by a later-described method, based on a SEM photograph of the composite oxide particles.

The second positive electrode active material comprises, for example, aggregated particles (composite oxide particles). The aggregated composite oxide particles refer to particles in which dozens of primary particles (specifically, 20 or more particles) are aggregated together, forming a secondary particle. For example, the aggregated composite oxide particles can be each composed of 10,000 to 5,000,000 primary particles. The aggregated composite oxide particles have a small primary particle diameter and are easily crushed, and therefore, the reaction area with the electrolyte solution is large. Therefore, a high capacity can be easily obtained. On the other hand, the side reaction with the electrolyte solution tends to increase, and the cycle retention ratio may decrease in some cases due to repeated charge and discharge. However, the decrease in the cycle retention ratio can be offset, by the first region rich in the first positive electrode active material and excellent in cycle characteristics.

The particle diameter of the primary particles contained in the aggregated particles may be in the range of, for example, 0.2 μm to 1.2 μm, 0.2 μm to 1.0 μm, or 0.2 μm to 0.5 μm. The particle diameter of the primary particles can be determined by observing the grain boundaries of the primary particles, based on a SEM photograph of the aggregated composite oxide particles. A plurality of (e.g., 20 or more) primary particles selected are observed for grain boundaries, to identify their contours, and the major axis of each primary particle is obtained from the contour, to calculate an average value of the major axis as the particle diameter of the primary particles.

The particle diameter of the aggregated particles (the particle diameter of the secondary particles) may be in the range of 5 μm to 20 μm, or 5 μm to 10 μm. In this case, a high cycle retention ratio can be easily realized. The particle diameter of the secondary particles is an average particle diameter obtained by a later-described method, based on a SEM photograph of the composite oxide particles.

The second region may be nearer to the positive electrode current collector than the first region is. That is, the first positive electrode active material may be contained more on the surface side of the positive electrode than on the positive electrode current collector side, and the second positive electrode active material may be contained more on the positive electrode current collector side than on the surface side of the positive electrode. In this case, since the first region rich in the first positive electrode active material with high compressive strength, is on the surface layer side of the positive electrode, the surface of the positive electrode is unlikely to be clogged when the positive electrode expands and becomes compressed as the discharge proceeds. The electrolyte solution can pass through the gaps between the first positive electrode active material particles, and enter into the second region. Therefore, the electrolyte permeability is favorable, and the cycle retention ratio can be improved.

In addition, in the non-aggregated composite oxide particles, the lithium ion migration resistance is higher than in the aggregated composite oxide particles. Therefore, when the first positive electrode active material comprises non-aggregated composite oxide particles, by disposing the first region rich in the first positive electrode active material nearer to the negative electrode than the second region is disposed, the charge-discharge reaction can proceed evenly within the positive electrode mixture layer. As a result, the cycle retention ratio can be improved.

The first region may contain a positive electrode active material having a compressive strength of less than 400 MPa (including the second positive electrode active material). The content of the first positive electrode active material in the first region may be 30 mass% or more, or may be 70 mass% or more. Likewise, the second region may contain a positive electrode active material having a compressive strength of more than 250 MPa (including the first positive electrode active material). The content of the second positive electrode active material in the second region may be 30 mass% or more, or may be 70 mass% or more. The compressive strength means, when referring to the primary particles, a compressive strength per one primary particle, and when referring to the secondary particles, a compressive strength per one secondary particle. The compressive strength (St) is calculated from the mathematical formula $St = 2.8P / \pi d^2$ (P: load applied to particles, d: particle diameter) described in "Journal of the Mining and Metallurgical Institute of Japan", volume 81, issue 932, published on December 1965, pages 1024 to 1030. Here, d represents the particle diameter of the secondary or primary particles, for which the particle diameter of the secondary particles is used when calculating the compressive strength of the secondary particles, and the particle diameter of the primary particles is used when calculating the compressive strength of the primary particles. The positive electrode mixture layer was observed with a CCD or the like, to select 20 particles at random. The compressive strength of each of the selected secondary particles is measured with a micro-compression tester, and the average value is calculated as the compressive strength.

The particle diameters and the contents in the positive electrode mixture layer of the first and second positive electrode active materials can be determined as follows by image analysis of an SEM photograph of a cross section of the positive electrode.

First, from the contour images of a particle of the first positive electrode active material and a particle of the second positive electrode active material in the SEM photograph, the area surrounded by each contour is determined. The diameter of a circle (equivalent circle) having the same area as that surrounded by the contour of the first positive electrode active material particle is determined as a particle diameter of each particle i, and the volume of a sphere having the same diameter is regarded as a volume $V_i$ of each particle i. Likewise, the diameter of a circle (equivalent circle) having the same area as that of the contour of the second positive electrode active material particle is determined as a particle diameter of each particle j, and the volume of a sphere having the same diameter is regarded as a volume Vj of each particle j. When the positive electrode active material is substantially composed of two materials: the first positive electrode active material and the second positive electrode active material, given that the densities of the first and second positive electrode active materials are respectively denoted by ρ1 and ρ2, and that components contained in a very small amount, such as a binder, are ignored, a content C1 of the first positive electrode active material in the predetermined region can be determined from the following formula, by deriving the Vi or Vj for each particle present in a predetermined region in a cross-sectional SEM image of the first positive electrode mixture layer. Likewise, a content C2 of the second positive electrode active material in the predetermined region can be determined from the following formula, by deriving the Vi or Vj for each particle present in a predetermined region in a cross-sectional SEM image of the second positive electrode mixture layer.

$$C1 = \Sigma_i \rho 1 Vi / (\Sigma_i \rho 1 Vi + \Sigma_j \rho 2 Vj)$$

$$C2 = \Sigma_j \rho 2 Vj / (\Sigma_i \rho 1 Vi + \Sigma_j \rho 2 Vj)$$

The content of the first positive electrode active material in the first or second region may be derived by randomly selecting a plurality of (e.g., 20 or more) small regions in the first or second region, to determine the C1 in each small region, and averaging the determined values. Likewise, the content of the second positive electrode active material in the first or second region may be derived by randomly selecting a plurality of (e.g., 20 or more) small regions in the first or second region, to determine the C2 in each small region, and averaging the determined values.

The C1 and C2 satisfy C1 > C2 in the first region, and can satisfy C1 < C2 in the second region. Specifically, the C1 may be 0.3 or more, 0.5 or more, 0.7 or more, or 0.8 or more in the first region. The C2 may be 0.3 or more, 0.5 or more, 0.7 or more, or 0.8 or more in the second region.

The area of the contour of the first positive electrode active material particle i present in a predetermined region in a cross-sectional SEM image is denoted by Si, and the area of the contour of the second positive electrode active material particle j present in the predetermined region is denoted by Sj. When the same material is used for the first and second positive electrode active materials, the content C1 can be estimated from an area ratio S1 of the first positive electrode active material particles expressed by the following formula. Likewise, the content C2 can be estimated from an area ratio S2 of the second positive electrode active material particles expressed by the following formula.

$$S1 = \Sigma_i Si / (\Sigma_i Si + \Sigma_j Sj)$$

$$S2 = \Sigma_j Sj / (\Sigma_i Si + \Sigma_j Sj)$$

The S1 in the first or second region may be derived by randomly selecting a plurality of (e.g., 20 or more) small regions in the first or second region, to determine the S1 in each small region, and averaging the determined values. Likewise, the S2 in the first or second region may be derived by randomly selecting a plurality of (e.g., 20 or more) small regions in the first or second region, to determine the S2 in each small region, and averaging the determined values. The S1 may be 0.3 or more, 0.5 or more, 0.7 or more, or 0.8 or more in the first region. The S2 may be 0.3 or more, 0.5 or more, 0.7 or more, or 0.8 or more in the second region.

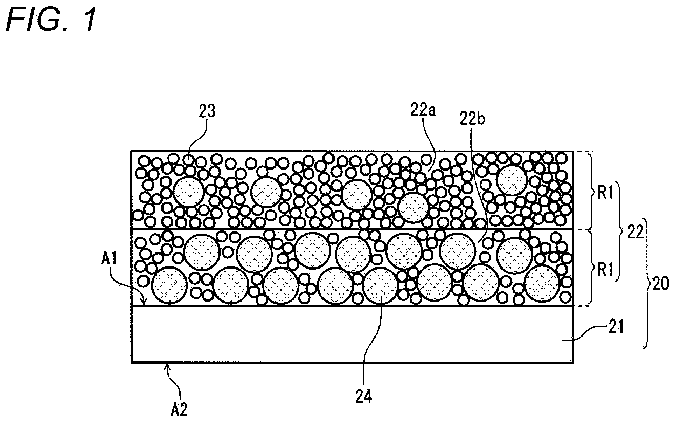

FIG. 1 is a schematic cross-sectional view showing the structure of a positive electrode for a secondary battery according to the present embodiment. A positive electrode 20 for a secondary battery includes a positive electrode current collector 21 and a positive electrode mixture layer 22 (22a, 22b). The positive electrode mixture layer 22 can be formed on both principal surfaces of the positive electrode current collector 21. In FIG. 1, the positive electrode mixture layer 22 formed on a principal surface A1 of the positive electrode current collector 21 is shown, with the illustration of a positive electrode mixture layer formed on a principal surface A2 on the opposite side of the principal surface A1 of the positive electrode current collector 21 omitted.

The positive electrode mixture layer 22 is divided into a first region R1 and a second region R2 having the same thickness. That is, the first region R1 and the second region R2 each refer to a region whose thickness is half the thickness of the positive electrode mixture layer 22. At this time, the first positive electrode mixture layer 22a is formed in the first region R1, and the second positive electrode mixture layer 22b is formed in the second region R2. The second positive electrode mixture layer 22b is interposed between the positive electrode current collector 21 and the first positive electrode mixture layer 22a. That is, the first positive electrode mixture layer 22a is on the surface side of the positive electrode, and faces the negative electrode. On the other hand, the second positive electrode mixture layer 22b is on the positive electrode current collector 21 side, and faces the principal surface A1 of the positive electrode current collector 21.

The first positive electrode mixture layer 22a contains a first positive electrode active material 23 having a compressive strength of 400 MPa or more. The first positive electrode active material 23 can comprise, for example, non-aggregated particles. The second positive electrode mixture layer 22b contains a second positive electrode active material 24 having a compressive strength of 250 MPa or less. The second positive electrode active material 24 comprises, for example, aggregated particles each composed of primary particles aggregated together. In FIG. 1, the boundaries between the primary particles in the second positive electrode active material 24 are shown by broken lines.

The second positive electrode active material 24 may be contained in the first positive electrode mixture layer 22a. However, the content of the second positive electrode active material 24 in the first positive electrode mixture layer 22a is smaller than that of the second positive electrode active material 24 in the second positive electrode mixture layer 22b. Likewise, the first positive electrode active material 23 may be contained in the second positive electrode mixture layer 22b. However, the content of the first positive electrode active material 23 in the second positive electrode mixture layer 22b is smaller than that of the first positive electrode active material 23 in the first positive electrode mixture layer 22a.

In the example of FIG. 1, the second positive electrode mixture layer 22b formed in the second region is nearer to the positive electrode current collector 21 than the first positive electrode mixture layer 22a formed in the first region. However, the positional relationship between the first and second positive electrode mixture layers 22a and 22b (the positional relationship between the first and second regions) may be reversed. That is, the first positive electrode mixture layer 22a may be nearer to the positive electrode current collector 21 than the second positive electrode mixture layer 22b.

Further, in the example of FIG. 1, both the first positive electrode mixture layer 22a and the second positive electrode mixture layer 22b are half the thickness of the whole positive electrode mixture layer 22, and the boundary between the first positive electrode mixture layer 22a and the second positive electrode mixture layer 22b coincides with the boundary between the first region and the second region. However, the positive electrode mixture layer 22a may be formed thicker than the second positive electrode mixture layer 22b, or conversely, the second positive electrode mixture layer 22b may be formed thicker than the first positive electrode mixture layer 22a. Between the first and second positive electrode mixture layers 22a and 22b, an intermediate layer may be interposed in which the contents of the first and second positive electrode active materials 23 and 24 are respectively in the range between the content in the first positive electrode mixture layer 22a and the content in the second positive electrode mixture layer 22b.

The above positive electrode 20 can be produced by preparing a plurality of kinds of positive electrode slurries differing in the ratio of the second positive electrode active material 24 to the first positive electrode active material 23 contained therein, and applying them to a surface of the positive electrode current collector 21.

Next, the secondary battery according to the embodiment of the present disclosure will be described in detail. The secondary battery includes, for example, a positive electrode, a negative electrode, an electrolyte solution and a separator as described below.

[Positive electrode]

The positive electrode includes a positive electrode current collector, and a positive electrode mixture layer formed on a surface of the positive electrode current collector and containing a positive electrode active material. For the positive electrode, the aforementioned positive electrode for a secondary battery having the first positive electrode mixture layer and the second positive electrode mixture layer is used. The first and second positive electrode mixture layers can be each formed by, for example, applying a positive electrode slurry in which a positive electrode mixture including a positive electrode active material, a binder, and an electrically conductive agent is dispersed in a dispersion medium, onto a surface of the positive electrode current collector, followed by drying. The applied film after drying may be rolled, if necessary. The positive electrode mixture layer may be formed on one surface or both surfaces of the positive electrode current collector.

As the positive electrode active material (first positive electrode active material and second positive electrode active material), a lithium-containing composite oxide having a layered rock-salt type crystal structure containing lithium and a transition metal can be used. Specifically, the lithium-containing composite oxide is, for example, $Li_aNi_{1-x-y}Co_xM_yO_2$ where $0 < a \leq 1.2$, $0 \leq x \leq 0.1$, $0 \leq y \leq 0.1$, $0 < x + y \leq 0.1$, and M is at least one selected from the group consisting of Na, Mg, Sc, Y, Mn, Fe, Cu, Zn, Al, Cr, Pb, Sb, and B. In view of the stability of the crystal structure, Al may be contained as the element represented by M. The value "a" representing the molar ratio of lithium increases and decreases during charge and discharge. Such a composite oxide is exemplified by a lithium-nickel-cobalt-aluminum composite oxide (e.g., $LiNi_{0.9}Co_{0.05}Al_{0.05}O_2$, $LiNi_{0.91}Co_{0.06}Al_{0.03}O_2$).

The first positive electrode active material and the second positive electrode active material differ in the compressive strength as described above. However, the material and composition may be the same or different between the first positive electrode active material and the second positive electrode active material. Another positive electrode active material corresponding neither to the first positive electrode active material nor to the second positive electrode active material (i.e., an active material having a compressive strength exceeding 250 MPa and below 400 MPa) may be contained in a predetermined amount in the positive electrode mixture layer.

In the following , a method for producing a lithium-containing composite oxide will be described, with a lithium-nickel-cobalt-aluminum composite oxide taken as an example.

The method for producing a lithium-containing composite oxide includes, for example, a composite hydroxide synthesis step of obtaining a Ni-Co-Al composite hydroxide or a Ni-Co-Mn composite hydroxide and the like, a raw material mixing step of mixing the composite hydroxide and a lithium compound, to obtain a raw material mixture, and a baking step of baking the raw material mixture to obtain composite oxide particles.

In the composite hydroxide synthesis step, for example, by co-precipitation, an alkaline solution, such as sodium hydroxide, is added dropwise to a solution of a metal salt containing Ni, Co, Al (or Mn) and the like under stirring, until the pH is adjusted to the alkaline side (e.g., 8.5 to 11.5), thereby to deposit (co-precipitate) a Ni-Co-Al composite hydroxide or a Ni-Co-Mn composite hydroxide. The composite hydroxide synthesis step preferably includes an aging step of leaving the deposited composite hydroxide to stand as it is in the reaction solution. By doing this, the finally obtained composite oxide particles tend be non-aggregated particles.

In the raw material mixing step, for example, the above composite hydroxide is mixed with a lithium compound, such as lithium hydroxide, lithium carbonate, or lithium nitrate, to obtain a raw material mixture. By adjusting the mixing ratio of the composite hydroxide to the lithium compound, it is possible to control the compressive strength of the finally obtained composite oxide particles, and to prepare non-aggregated particles. In order to form the composite oxide particles as non-aggregated particles and obtain a compression strength of 400 MPa or more, the composite hydroxide may be mixed with the lithium compound in such a molar ratio that the metal elements (Ni + Co + Al or Mn) : Li is in a rage of 1.0:1.02 to 1.0:1.2.

In the baking step, for example, the raw material mixture is baked in an oxygen atmosphere, to obtain composite oxide particles. By adjusting the baking temperature of the raw material mixture, too, it is possible to control the compressive strength of the finally obtained composite oxide particles, and to prepare non-aggregated particles. In order to form the composite oxide particles as non-aggregated particles and obtain a compressive strength of 400 MPa or more, the baking temperature of the raw material mixture may be, for example, in the range of 750 °C or higher and 1100 °C or lower. The baking time is preferably 20 hours to 150 hours, more preferably 20 hours to 100 hours. When the baking time of the composite oxide particles exceeds 150 hours, as compared to when the baking time is 150 hours or less, for example, deterioration in the material physical properties or the electrochemical characteristics may be caused in some cases.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

[Negative electrode]

The negative electrode includes, for example, a negative electrode current collector, and a negative electrode active material layer formed on a surface of the negative electrode current collector. The negative electrode active material layer can be formed by, for example, applying a negative electrode slurry in which a negative electrode mixture including a negative electrode active material, a binder, and the like is dispersed in a dispersion medium, onto a surface of the negative electrode current collector, followed by drying. The applied film after drying may be rolled, if necessary. That is, the negative electrode active material may be a material mixture layer. Also, a lithium metal foil or a lithium alloy foil may be laminated on the negative electrode current collector. The negative electrode active material layer may be formed on one surface or both surfaces of the negative electrode current collector.

The negative electrode active material layer includes the negative electrode active material as an essential component, and may further include a binder, a conductive agent, a thickener, and the like, as optional components. For the binder, the conductive agent, and the thickener, any known material can be used.

The negative electrode active material includes a material that electrochemically absorbs or releases lithium ions, lithium metal, and/or a lithium alloy. As the material that electrochemically absorbs or releases lithium ions, a carbon material, an alloy-type material, and the like can be used. Examples of the carbon material include graphite, graphitizable carbon (soft carbon), and non-graphitizable carbon (hard carbon). Particularly preferred is graphite, which is stable during charge and discharge and whose irreversible capacity is small. The alloy-type material contains, for example, at least one metal capable of forming an alloy with lithium, examples of which include silicon, tin, a silicon alloy, a tin alloy, and a silicon compound. These may be used in a form combined with oxygen, such as silicon oxide or tin oxide.

As the alloy-type material containing silicon, for example, a silicon composite material including a lithium ion conductive phase and silicon particles dispersed in the lithium ion conductive phase can be used. As the lithium ion conductive phase, for example, a silicon oxide phase, a silicate phase and/or a carbon phase can be used. The main component of the silicon oxide phase (e.g., 95 to 100 mass%) can be silicon dioxide. Particularly preferred is a composite material composed of a silicate phase and silicon particles dispersed in the silicate phase, in terms of its high capacity and small irreversible capacity.

The silicate phase may include, for example, at least one selected from the group consisting of Group I and Group II elements of the long periodic table. As Group I and Group II elements of the long-periodic table, for example, lithium (Li), potassium (K), sodium (Na), magnesium (Mg), and calcium (Ca), strontium (Sr), barium (Ba) and the like can be used. Other elements, such as aluminum (Al), boron (B), lanthanum (La), phosphorus (P), zirconium (Zr), and titanium (Ti), may be included. Particularly preferred is a lithium-containing silicate phase (hereinafter sometimes referred to as a lithium silicate phase) because the irreversible capacity is small, and the initial charge-discharge efficiency is high.

The lithium silicate phase is an oxide phase containing lithium (Li), silicon (Si), and oxygen (O), and may contain another element. The atomic ratio: O/Si of O to Si in the lithium silicate phase is, for example, greater than 2 and less than 4. The O/Si is preferably greater than 2 and less than 3. The atomic ratio: Li/Si of Li to Si in the lithium silicate phase is, for example, greater than 0 and less than 4. The lithium silicate phase can have a composition represented by a formula: $Li_{2z}SiO_{2+z}$ where $0 < z < 2$. In the formular, z preferably satisfies $0 < z < 1$, and $z = 1/2$ is more preferable. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, an amorphous carbon having low crystallinity. The amorphous carbon may be, for example, hard carbon, soft carbon, or otherwise.

Examples of the negative electrode current collector include a non-porous electrically conductive base material (e.g., metal foil), and a porous electrically conductive base material (e.g., mesh, net, punched sheet). The negative electrode current collector may be made of, for example, stainless steel, nickel, a nickel alloy, copper, and a copper alloy.

[Electrolyte solution]

The electrolyte solution includes a solvent and a solute dissolved in the solvent. The solute is an electrolyte salt that ionically dissociates in the electrolyte solution. The solute can include, for example, a lithium salt. The components of the electrolyte solution other than the solvent and solute are additives. The electrolyte solution can contain various additives.

The solvent may be an aqueous solvent or a non-aqueous solvent. As the non-aqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), and ethyl propionate (EP). These non-aqueous solvents may be used singly or in combination of two or more kinds.

As the non-aqueous solvent, other than the above, cyclic ethers, chain ethers, nitriles, such as acetonitrile, amides, such as dimethylformamide, can be used.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether.

Examples of the chain ethers include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethyleneglycol dimethylether, diethyleneglycol diethylether, diethyleneglycol dibutylether, 1,1-dimethoxymethane, 1,1-diethoxyethane, triethyleneglycol dimethylether, and tetraethyleneglycol dimethylether.

These solvents may be a fluorinated solvent in which one or more hydrogen atoms are substituted by fluorine atom. As the fluorinated solvent, fluoroethylene carbonate (FEC) may be used.

Examples of the lithium salt include a lithium salt of a chlorine-containing acid (e.g., $LiClO_4$, $LiAlCl_4$, $LiB_{10}Cl_{10}$), a lithium salt of a fluorine-containing acid (e.g., $LiPF_6$, $LiPF_2O_2$, $LiBF_4$, $LiSbF_6$, $LiAsF_6$, $LiCF_3SO_3$, $LiCF_3CO_2$), a lithium salt of a fluorine-containing acid imide (e.g., $LiN(FSO_2)_2$, $LiN(CF_3SO_2)_2$, $LiN(CF_3SO_2)(C_4F_9SO_2)$, $LiN(C_2F_5SO_2)_2$), and a lithium halide (e.g., LiCl, LiBr, LiI). These lithium salts may be used singly or in combination of two or more kinds.

The concentration of the lithium salt in the electrolyte solution may be 1 mol/liter or more and 2 mol/liter or less, and may be 1 mol/liter or more and 1.5 mol/liter or less. By controlling the lithium salt concentration in the above range, an electrolyte solution having excellent ion conductivity and appropriate viscosity can be obtained. The lithium salt concentration is not limited to the above.

The electrolyte solution may contain any other known additives. Examples of the additives include 1,3-propanesarton, methyl benzenesulfonate, cyclohexylbenzene, biphenyl, diphenyl ether, fluorobenzene, and the like.

[Separator]

A separator is interposed between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The separator is preferably made of, for example, polyolefin, such as polypropylene and polyethylene.

In an exemplary structure of the secondary battery, an electrode group formed by winding the positive electrode and the negative electrode with the separator interposed therebetween is housed together with a non-aqueous electrolyte in an outer case. The wound-type electrode group may be replaced with a different form of the electrode group, such as a stacked-type electrode group formed by stacking the positive electrode and the negative electrode with the separator interposed therebetween. The secondary battery may be of any type, such as a cylindrical, prismatic, coin, button, or laminate type.

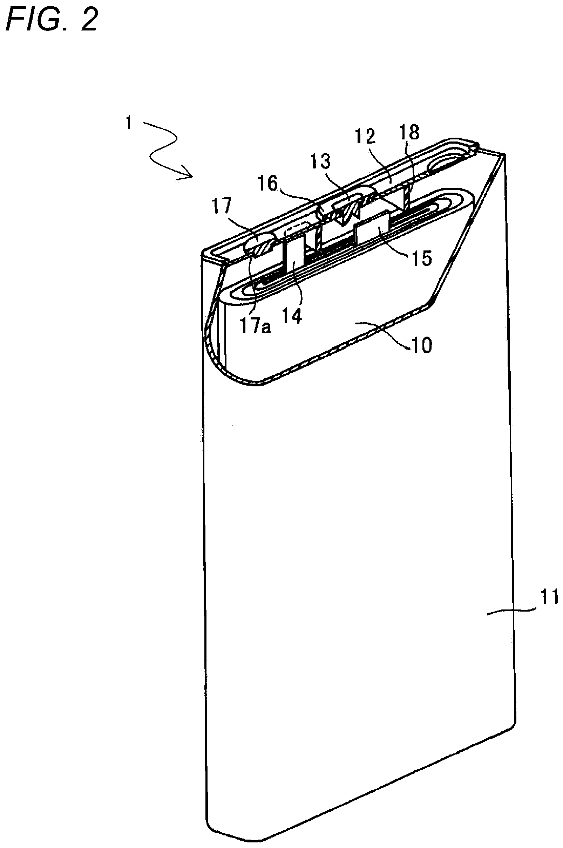

FIG. 2 is a partially cut-away schematic oblique view of a prismatic secondary battery according to an embodiment of the present disclosure.

The battery includes a bottomed prismatic battery case 11, and an electrode group 10 and a non-aqueous electrolyte housed in the battery case 11. The electrode group 10 has a long negative electrode, a long positive electrode, and a separator interposed therebetween and preventing them from directly contacting with each other. The electrode group 10 is formed by winding the negative electrode, the positive electrode, and the separator around a flat plate-like winding core, and then removing the winding core.

To the negative electrode current collector of the negative electrode, a negative electrode lead 15 is attached at its one end, by means of welding or the like. To the positive electrode current collector of the positive electrode, a positive electrode lead 14 is attached at its one end, by means of welding or the like. The negative electrode lead 15 is electrically connected at its other end to a negative electrode terminal 13 disposed at a sealing plate 5. A gasket 16 is disposed between the sealing plate 12 and the negative electrode terminal 13, providing electrical insulation therebetween. The positive electrode lead 14 is connected at its other end to the sealing plate 12, and electrically connected to the battery case 11 serving as a positive electrode terminal. A frame 18 made of resin that separates the electrode group 10 from the sealing plate 12 and also separates the negative electrode lead 15 from the battery case 11 is disposed above the electrode group 10. The opening of the battery case 11 is sealed with the sealing plate 12. The sealing plate 12 has an injection port 17a, and the electrolyte is injected through the injection port 17a. Thereafter, the injection port 17a is closed with a sealing stopper 17.

The structure of the secondary battery may be of a cylindrical shape, a coin shape, a button shape or the like including a battery case made of metal, and may be of a laminate type including a battery case made of a laminate sheet which is a laminate of a barrier layer and a resin sheet. In the present disclosure, the type, shape, and the like of the secondary battery are not limited.

The present disclosure will be specifically described below with reference to Examples and Comparative Examples. It is to be noted, however, the present disclosure is not limited to the following Examples.

<Example 1>

[Production of negative electrode]

Graphite serving as a negative electrode active material, sodium carboxymethylcellulose (CMC-Na), styrene-butadiene rubber (SBR), and water were mixed in a predetermined ratio, to prepare a negative electrode slurry. Next, the negative electrode slurry was applied onto a surface of copper foil serving as a negative electrode current collector, and the applied film was dried, and rolled, to form a negative electrode mixture layer on both sides of the copper foil.

[Synthesis of first positive electrode active material]

$[Ni_{0.8}Co_{0.15}Al_{0.05}](OH)_2$ prepared by coprecipitation and LiOH were mixed in Ishikawa's grinding mortar in a molar ratio of Li to the total amount of Ni, Co and Al of 1.1:1.0. The mixture was then baked at 800 °C for 50 hours in an oxygen atmosphere to obtain a first positive electrode active material. The compressive strength of the obtained first positive electrode active material was 450 MPa.

The first positive electrode active material was embedded in a resin, and subjected to a cross-section polisher (CP) processing, to prepare a cross section of the particles, and the cross section was observed under a SEM. The observation found that the composite oxide particles were present in a state in which the particles were completely separated into primary particles one by one, or 2 to 19 primary particles were aggregated together, and were non-aggregated particles. The particle diameter of the particles of the first positive electrode active material calculated by the above method was 3 $\mu$m.

[Synthesis of second positive electrode active material]

$[Ni_{0.8}Co_{0.15}Al_{0.05}](OH)_2$ prepared by coprecipitation and LiOH were mixed in Ishikawa's grinding mortar in a molar ratio of Li to the total amount of Ni, Co and Al of 1.1:1.0. The mixture was then baked at 730 °C for 50 hours in an oxygen atmosphere to obtain a second positive electrode active material. The compressive strength of the obtained second positive electrode active material was 150 MPa.

The second positive electrode active material was embedded in a resin, and subjected to a cross-section polisher (CP) processing, to prepare a cross section, and the cross section was observed under a SEM. The observation found that the second positive electrode active material was in an aggregated state. The particle diameter of the particles of the second positive electrode active material (i.e., the particle diameter of the secondary particles) calculated by the above method was approximately 10 $\mu$m, and the particle diameter of the primary particles was 326 nm.

[Production of positive electrode]

The first positive electrode active material, the second positive electrode active material, acetylene black, polyvinylidene fluoride, and N-methyl-2-pyrrolidone (NMP) were mixed in a predetermined mass ratio such that the mass ratio of the first positive electrode active material to the second positive electrode active material was 8:2, to prepare a first positive electrode slurry. Similarly, the first positive electrode active material, the second positive electrode active material, acetylene black, polyvinylidene fluoride, and N-methyl-2-pyrrolidone (NMP) were mixed in a predetermined mass ratio such that the mass ratio of the first positive electrode active material to the second positive electrode active material was 2:8, to prepare a second positive electrode slurry.

Next, the second positive electrode slurry was applied onto a surface of an aluminum foil serving as a positive electrode current collector, and the first positive electrode slurry was further applied thereon. The first positive electrode slurry and the second positive electrode slurry were applied in the same amount. The applied film was dried, and then rolled, to form a positive electrode mixture layer having a first positive electrode mixture layer and a second positive electrode mixture layer on both sides of the aluminum foil. The density after rolling of the positive electrode mixture layer as a whole, including the first and second positive electrode mixture layers, was set to 3.6 $g/cm^3$.

From the thickness of the positive electrode mixture layer when the positive electrode mixture layer was rolled at a constant linear pressure, the density of the positive electrode mixture layer under compression was determined, which was 3.63 $g/cm^3$.

[Preparation of electrolyte solution]

To a mixed solvent containing fluoroethylene carbonate (FEC), ethyl methyl carbonate (EMC), and dimethyl ether (DME) in a volume ratio of 4:1:15, $LiPF_6$ was added as a lithium salt, to prepare an electrolyte solution. The concentration of $LiPF_6$ in the non-aqueous electrolyte solution was set to 1.0 mol/liter.

[Fabrication of secondary battery]

A lead tab was attached to each electrode, and the positive electrode and the negative electrode were spirally wound with a separator interposed therebetween, such that the lead was positioned at the outermost layer, to prepare an electrode group. The electrode group was inserted into an outer case made of a laminated film having an aluminum foil as a barrier layer, and vacuum dried at 105 °C for 2 hours, and then, the non-aqueous electrolyte solution was injected thereinto. The opening of the outer case was sealed, to complete a battery A1.

<Comparative Example 1>

In the production of the positive electrode, only the first positive electrode slurry was applied, and the applied film was dried, and then rolled, to form a positive electrode mixture layer having the first positive electrode mixture layer on both sides of the aluminum foil. The first positive electrode slurry was applied in an amount equal to the total amount of the first and second positive electrode slurries applied in Example 1.

Except for the above, a secondary battery was produced in the same manner as in Example 1, and thus, a battery B1 was obtained.

From the thickness of the positive electrode mixture layer when the positive electrode mixture layer was rolled at a constant linear pressure, the density of the positive electrode mixture layer under compression was determined, which was 3.47 $g/cm^3$.

<Comparative Example 2>

In the production of the positive electrode, only the second positive electrode slurry was applied, and the applied film was dried, and then rolled, to form a positive electrode mixture layer having the second positive electrode mixture layer on both sides of the aluminum foil. The second positive electrode slurry was applied in an amount equal to the total amount of the first and second positive electrode slurries applied in Example 1.

Except for the above, a secondary battery was produced in the same manner as in Example 1, and thus, a battery B2 was obtained.

From the thickness of the positive electrode mixture layer when the positive electrode mixture layer was rolled at a constant linear pressure, the density of the positive electrode mixture layer under compression was determined, which was 3.61 $g/cm^3$.

<Example 2>

In the production of the positive electrode, the first positive electrode slurry was applied onto a surface of an aluminum foil serving as a positive electrode current collector, and the second positive electrode slurry was further applied thereon. The first positive electrode slurry and the second positive electrode slurry were applied respectively in the same amount as in Example 1. The applied film was dried, and then rolled, to form a positive electrode mixture layer having a first positive electrode mixture layer and a second positive electrode mixture layer on both sides of the aluminum foil. In the present Example, the first positive electrode mixture layer and the second positive electrode mixture layer are stacked in reverse order, and the first positive electrode mixture layer is on the positive electrode current collector side. The density after rolling of the positive electrode mixture layer as a whole including the first and second positive electrode mixture layers was set to 3.4 $g/cm^3$.

Except for the above, a secondary battery was produced in the same manner as in Example 1, and thus, a battery A2 was obtained.

From the thickness of the positive electrode mixture layer when the positive electrode mixture layer was rolled at a constant linear pressure, the density of the positive electrode mixture layer under compression was determined, which was 3.41 $g/cm^3$.

<Comparative Example 3>

In the production of the positive electrode, only the first positive electrode slurry was applied, and the applied film was dried, and then rolled, to form a positive electrode mixture layer having the first positive electrode mixture layer on both sides of the aluminum foil. The first positive electrode slurry was applied in an amount equal to the total amount of the first and second positive electrode slurries applied in Example 2.

Except for the above, a secondary battery was produced in the same manner as in Example 2, and thus, a battery B3 was obtained.

From the thickness of the positive electrode mixture layer when the positive electrode mixture layer was rolled at a constant linear pressure, the density of the positive electrode mixture layer under compression was determined, which was 3.48 $g/cm^3$.

[Evaluation]

(Initial charge and discharge)

Each of the batteries after completion was placed in a 25 °C environment and subjected to a constant-current charge at a current of 0.3 It until the voltage reached 4.2 V, and then, to a constant-voltage charge at a constant voltage of 4.2 V until the current reached 0.02 It. Then, a constant-current discharge was performed at a current of 0.5 It until the voltage dropped to 2.5 V, to determine an initial capacity $C_0$. The charge and discharge were performed in a 25 °C environment.

(Capacity retention ratio)

With the rest time between charge and discharge of 10 minutes, in a 25 °C environment, charge and discharge were repeated 30 cycles in total under the charge and discharge conditions as mentioned above, to determine a discharge capacity $C_1$ at the 30th cycle. The ratio $R_1 = C_1/C_0$ of the discharge capacity $C_1$ to the initial discharge capacity $C_0$ was calculated by percentage and evaluated as a capacity retention ratio.

# EP 4 099 422 B1

(Direct current internal resistance (DCIR) measurement)

Each of the batteries after the initial charge and discharge test was placed in a 25 °C environment, a constant-current charge was performed at a current of 0.3 It until the SOC reached 50%. After left to stand for 2 hours, the battery was discharged at a current of 0.5 It for 30 seconds. From the drop in voltage between before and after the discharge, the resistance value was determined as an initial DCIR when SOC = 50%.

Table 1 shows the evaluation results of the initial capacity $C_0$, the capacity retention ratio $R_1$ and the DCIR in the batteries A1, B1 and B2. Table 1 also shows the density of the positive electrode mixture layer used in each battery under application of a constant linear pressure. Table 1 indicates that the battery A1 is excellent in the compressibility of the positive electrode mixture layer, as compared to the batteries B1 and B2. Furthermore, the battery A1 exhibits a high capacity retention ratio and a low DCIR as compared to the batteries B1 and B2. The battery A1 can realize a high initial capacity $C_0$, although somewhat lower than that in the battery B2.

Table 2 shows the evaluation results of the initial capacity $C_0$, the capacity retention ratio $R_1$ and the DCIR in the batteries A2 and B3. Table 2 also shows the density of the positive electrode mixture layer used in each battery under application of a constant linear pressure. Table 2 indicates that the battery A2 has a high capacity retention rate, a low DCIR, and a high initial capacity $C_0$ as compared to the battery B3, although the positive electrode mixture layer is hard to be compressed as compared to that of the battery B3.

The foregoing shows that the batteries A1 and A2 can realize a battery having a high initial capacity and excellent cycle characteristics. In terms of improving the cycle characteristics, the battery A1 in which the positive electrode mixture layer rich in the first positive electrode active material is arranged on the positive electrode surface side is more preferable than the battery A2.

[Table 1]

| Battery | Positive electrode mixture layer density under compression / [g/cm³] | Initial discharge capacity $C_0$ / [mAh/g] | DCIR / [mΩ] | Capacity retention ratio $R_1$ / [%] |
|---|---|---|---|---|
| A1 | 3.63 | 209 | 1.4 | 83.13 |
| B1 | 3.47 | 203 | 3.24 | 45.52 |
| B2 | 3.61 | 214 | 2.16 | 77.96 |

[Table 2]

| Battery | Positive electrode mixture layer density under compression / [g/cm³] | Initial discharge capacity $C_0$ / [mAh/g] | DCIR / [mΩ] | Capacity retention ratio $R_1$ / [%] |
|---|---|---|---|---|
| A2 | 3.41 | 209 | 1.35 | 80.14 |
| B3 | 3.48 | 203 | 1.67 | 78.03 |

[Industrial Applicability]

According to the secondary battery according to the present disclosure, it is possible to provide a non-aqueous electrolyte secondary battery having a high capacity and excellent cycle characteristics. The secondary battery according to the present disclosure is useful as a main power source for mobile communication equipment, portable electronic equipment, and the like.

[Reference Signs List]

1     non-aqueous electrolyte secondary battery
10    electrode group
11    battery case
12    sealing plate
13    negative electrode terminal
14    positive electrode lead

| 15 | negative electrode lead |
| 16 | gasket |
| 17 | sealing stopper |
| 17a | injection port |
| 18 | frame |
| 20 | positive electrode |
| 21 | positive electrode current collector |
| 22 | positive electrode mixture layer |
| 22a | first positive electrode mixture layer |
| 22b | second positive electrode mixture layer |
| 23 | first positive electrode active material |
| 24 | second positive electrode active material |

**Claims**

1. A positive electrode (20, 21) for a secondary battery (10) comprising: a positive electrode current collector (21); and a positive electrode mixture layer (22, 22a, 22b) containing a positive electrode active material (23, 24) and disposed on a surface of the positive electrode current collector, wherein

   the positive electrode mixture layer contains a first positive electrode active material (23) having a compressive strength of 400 MPa or more, and a second positive electrode active material (24) having a compressive strength of 250 MPa or less, and
   when the positive electrode mixture layer is divided into a first region (R1) and a second region (R2) having the same thickness, the first positive electrode active material is contained more in the first region than in the second region, and the second positive electrode active material is contained more in the second region than in the first region.

2. The positive electrode for a secondary battery according to claim 1, wherein the second region is nearer to the positive electrode current collector than the first region.

3. The positive electrode for a secondary battery according to claim 1 or 2, wherein the first positive electrode active material comprises non-aggregated particles.

4. The positive electrode for a secondary battery according to claim 3, wherein a particle diameter of the non-aggregated particles is 5 $\mu$m or less.

5. The positive electrode for a secondary battery according to any one of claims 1 to 4, wherein the second positive electrode active material comprises aggregated particles each composed of primary particles aggregated together.

6. The positive electrode for a secondary battery according to claim 5, wherein a particle diameter of the primary particles is 0.2 $\mu$m to 1.2 $\mu$m.

7. The positive electrode for a secondary battery according to claim 5 or 6, wherein a particle diameter of the aggregated particles is 5 $\mu$m to 20 $\mu$m.

8. The positive electrode for a secondary battery according to any one of claims 1 to 7, wherein a content of the first positive electrode active material in the first region is 30 mass% or more.

9. The positive electrode for a secondary battery according to any one of claims 1 to 8, wherein a content of the second positive electrode active material in the second region is 30 mass% or more.

10. A secondary battery having

    the positive electrode for a secondary battery of any one of claims 1 to 9,
    a separator, a negative electrode facing the positive electrode with the separator interposed between the positive electrode and the negative electrode, and an electrolyte solution.

**Patentansprüche**

1. Positivelektrode (20, 21) für eine Sekundärbatterie (10) umfassend: einen Positivelektroden-Stromkollektor (21); und eine Positivelektroden-Gemischschicht (22, 22a, 22b), die ein Positivelektroden-Aktivmaterial (23, 24) umfasst und auf einer Oberfläche des Positivelektroden-Stromkollektors angeordnet ist, wobei die Positivelektroden-Gemischschicht ein erstes Positivelektroden-Aktivmaterial (23), das eine Druckfestigkeit von 400 MPa oder höher aufweist, und ein zweites Positivelektroden-Aktivmaterial (24) enthält, das eine Druckfestigkeit von 250 MPa oder niedriger aufweist, und wenn die Positivelektroden-Gemischschicht in eine erste Region (R1) und eine zweite Region (R2) unterteilt ist, welche die gleiche Dicke aufweisen, das erste Positivelektroden-Aktivmaterial mehr in der ersten Region enthalten ist als in der zweiten Region und das zweite Positivelektroden-Aktivmaterial mehr in der zweiten Region enthalten ist als in der ersten Region.

2. Positivelektrode für eine Sekundärbatterie nach Anspruch 1, wobei die zweite Region näher an dem Positivelektroden-Stromkollektor liegt als die erste Region.

3. Positivelektrode für eine Sekundärbatterie nach Anspruch 1 oder 2, wobei das erste Positivelektroden-Aktivmaterial nicht aggregierte Partikel umfasst.

4. Positivelektrode für eine Sekundärbatterie nach Anspruch 3, wobei ein Partikeldurchmesser der nicht aggregierten Partikel 5 μm oder kleiner beträgt.

5. Positivelektrode für eine Sekundärbatterie nach einem der Ansprüche 1 bis 4, wobei das zweite Positivelektroden-Aktivmaterial aggregierte Partikel umfasst, die jeweils aus Primärpartikeln bestehen, die zusammenaggregiert sind.

6. Positivelektrode für eine Sekundärbatterie nach Anspruch 5, wobei ein Partikeldurchmesser der Primärpartikel 0,2 μm bis 1,2 μm beträgt.

7. Positivelektrode für eine Sekundärbatterie nach Anspruch 5 oder 6, wobei ein Partikeldurchmesser der aggregierten Partikel 5 μm bis 20 μm beträgt.

8. Positivelektrode für eine Sekundärbatterie nach einem der Ansprüche 1 bis 7, wobei ein Gehalt des ersten Positivelektroden-Aktivmaterials in der ersten Region 30 Masse-% beträgt.

9. Positivelektrode für eine Sekundärbatterie nach einem der Ansprüche 1 bis 8, wobei ein Gehalt des zweiten Positivelektroden-Aktivmaterials in der zweiten Region 30 Masse-% oder höher beträgt.

10. Sekundärbatterie, aufweisend

   die Positivelektrode für eine Sekundärbatterie nach einem der Ansprüche 1 bis 9,
   einen Separator, eine Negativelektrode, die der Positivelektrode mit dem zwischen der Positivelektrode und der Negativelektrode eingefügten Separator zugewandt ist, und eine Elektrolytlösung.


**Revendications**

1. Électrode positive (20, 21) pour une batterie rechargeable (10), comprenant : un collecteur de courant d'électrode positive (21) ; et une couche de mélange d'électrode positive (22, 22a, 22b) contenant un matériau actif d'électrode positive (23, 24) et disposée sur une surface du collecteur de courant d'électrode positive, dans laquelle

   la couche de mélange d'électrode positive contient un premier matériau actif d'électrode positive (23) ayant une résistance à la compression de 400 MPa ou plus, et un deuxième matériau actif d'électrode positive (24) ayant une résistance à la compression de 250 MPa ou moins, et
   quand la couche de mélange d'électrode positive est divisée en une première région (R1) et une deuxième région (R2) ayant la même épaisseur, le premier matériau actif d'électrode positive est contenu davantage dans la première région que dans la deuxième région, et le deuxième matériau actif d'électrode positive est contenu davantage dans la deuxième région que dans la première région.

2. Électrode positive pour une batterie rechargeable selon la revendication 1, dans laquelle la deuxième région est plus proche du collecteur de courant d'électrode positive que la première région.

3. Électrode positive pour une batterie rechargeable selon la revendication 1 ou 2, dans laquelle le premier matériau actif d'électrode positive comprend des particules non agrégées.

4. Électrode positive pour une batterie rechargeable selon la revendication 3, dans laquelle le diamètre de particule des particules non agrégées est de 5 μm ou moins.

5. Électrode positive pour une batterie rechargeable selon l'une quelconque des revendications 1 à 4, dans laquelle le deuxième matériau actif d'électrode positive comprend des particules agrégées composées chacune de particules primaires agrégées ensemble.

6. Électrode positive pour une batterie rechargeable selon la revendication 5, dans laquelle le diamètre de particule des particules primaires est de 0,2 μm à 1,2 μm.

7. Électrode positive pour une batterie rechargeable selon la revendication 5 ou 6, dans laquelle le diamètre de particule des particules agrégées est de 5 μm à 20 μm.

8. Électrode positive pour une batterie rechargeable selon l'une quelconque des revendications 1 à 7, dans laquelle la teneur en le premier matériau actif d'électrode positive dans la première région est de 30 % en masse ou plus.

9. Électrode positive pour une batterie rechargeable selon l'une quelconque des revendications 1 à 8, dans laquelle la teneur en le deuxième matériau actif d'électrode positive dans la deuxième région est de 30 % en masse ou plus.

10. Batterie rechargeable ayant

l'électrode positive pour une batterie rechargeable de l'une quelconque des revendications 1 à 9, un séparateur, une électrode négative faisant face à l'électrode positive avec le séparateur interposé entre l'électrode positive et l'électrode négative, et une solution d'électrolyte.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019026629 A
- WO 2019097951 A

- US 2017256788 A1

**Non-patent literature cited in the description**

- *Journal of the Mining and Metallurgical Institute of Japan*, December 1965, vol. 81 (932), 1024-1030